(19) Europäisches Patentamt
European Patent Office
Office européen des brevets

(11) **EP 4 362 346 A1**

(12) **EUROPEAN PATENT APPLICATION**
published in accordance with Art. 153(4) EPC

(43) Date of publication:
**01.05.2024   Bulletin 2024/18**

(21) Application number: **22851896.5**

(22) Date of filing: **20.07.2022**

(51) International Patent Classification (IPC):
**H04B 7/06** (2006.01)

(52) Cooperative Patent Classification (CPC):
**H04B 7/06; H04W 16/28; H04W 88/08**

(86) International application number:
**PCT/CN2022/106718**

(87) International publication number:
**WO 2023/011182 (09.02.2023 Gazette 2023/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.07.2021   CN 202110877269**

(71) Applicant: **Huawei Technologies Co., Ltd.
Shenzhen, Guangdong 518129 (CN)**

(72) Inventors:
• **HUANG, Meiyu
  Shenzhen, Guangdong 518129 (CN)**

• **GAO, Hui
  Shenzhen, Guangdong 518129 (CN)**
• **SUN, Shaofeng
  Shenzhen, Guangdong 518129 (CN)**
• **ZHOU, Jiachong
  Shenzhen, Guangdong 518129 (CN)**
• **ZHU, Qingming
  Shenzhen, Guangdong 518129 (CN)**

(74) Representative: **Pfenning, Meinig & Partner mbB
Patent- und Rechtsanwälte
Theresienhöhe 11a
80339 München (DE)**

(54) **COMMUNICATION APPARATUS**

(57)     Embodiments of this application disclose a communication apparatus, and relate to the communication field. The communication apparatus specifically includes a first antenna group and a second antenna group. A quantity of element units in the second antenna group is greater than a quantity of element units in the first antenna group. The first antenna group is connected to a first radio frequency channel, and the second antenna group is connected to a second radio frequency channel. The first antenna group may be driven using a first radio frequency channel group to meet a requirement for an antenna coverage capability of a base station. The second antenna group is driven using a second radio frequency channel group to meet a beamforming requirement of a traffic channel of the base station. Therefore, requirements for the antenna coverage capability and a beamforming effect of the base station are both ensured.

FIG. 2

## Description

This application claims priority to Chinese Patent Application No. 202110877269.8, filed with the China National Intellectual Property Administration on July 31, 2021 and entitled "COMMUNICATION APPARATUS", which is incorporated herein by reference in its entirety.

## TECHNICAL FIELD

Embodiments of this application relate to the communication field, and in particular, to a communication apparatus.

## BACKGROUND

With development of communication technologies, an increasingly high requirement is imposed on a communication apparatus. For example, both an antenna coverage capability and a beamforming effect of the communication apparatus are required to meet people's requirements.

Each channel of a conventional nTnR (n=2 or 4) base station drives one element unit, and each element unit covers a horizontal beamwidth of 120°. In addition, there is an nTnR base station in a digital-analog hybrid beamforming manner. Each channel of the nTnR base station may drive a plurality of element units. Beamforming is performed between the plurality of element units via an analog beam, and beamforming is performed between channels via a digital beam.

However, a beamforming effect of the conventional nTnR base station is poor, and a coverage area of a single beam of a single channel decreases after beamforming is performed via the analog beam between the plurality of element units of the nTnR base station in the digital-analog hybrid beamforming manner. Therefore, a plurality of analog beams are needed for time division scanning, to implement 120° cell coverage, but an antenna coverage capability requirement cannot be met in the case of insufficiency of a time division scanning capability.

## SUMMARY

Embodiments of this application provide a communication apparatus, to ensure requirements for an antenna coverage capability and a beamforming effect of a base station.

According to a first aspect of this application, a communication apparatus is provided. The communication apparatus includes a first antenna group and a second antenna group. A quantity of element units in the second antenna group is greater than a quantity of element units in the first antenna group. The first antenna group is connected to a first radio frequency channel, and the second antenna group is connected to a second radio frequency channel.

In this application, both the first antenna group and the second antenna group are dual-polarized antennas. The quantity of element units in the first antenna group is an even number, and the quantity of element units in the second antenna group is also an even number.

In this application, the first radio frequency channel and the second radio frequency channel are disposed outside the communication apparatus. The first radio frequency channel and the second radio frequency channel may be included in a radio frequency unit. In other words, the communication apparatus is connected to the external radio frequency unit.

According to the first aspect, the communication apparatus includes the first antenna group and the second antenna group. The quantity of element units in the second antenna group is greater than the quantity of element units in the first antenna group. The first antenna group is connected to the first radio frequency channel, and the second antenna group is connected to the second radio frequency channel. The first antenna group may be driven using a first radio frequency channel group to meet a requirement for an antenna coverage capability of the base station. The second antenna group is driven using a second radio frequency channel group to meet a beamforming requirement of a traffic channel of the base station. Therefore, requirements for the antenna coverage capability and a beamforming effect of the base station are both ensured.

In a possible implementation of the first aspect, the communication apparatus further includes a phase shifter. The phase shifter is disposed in the second antenna group, and the second antenna group is configured to implement analog beamforming via the phase shifter.

In this possible implementation, the second antenna group implements the analog beamforming via the phase shifter, so that a beamforming gain of the second antenna group is higher than a beamforming gain of the first antenna group. Therefore, the second antenna group is driven using the second radio frequency channel group, to meet the beamforming requirement of the traffic channel of the base station. This improves implementability of the solution.

In a possible implementation of the first aspect, the quantity of element units in the second antenna group is an integer multiple of the quantity of element units in the first antenna group.

In this possible implementation, the quantity of element units in the second antenna group is an integer multiple of the quantity of element units in the first antenna group. Therefore, a structure design of the antenna group is more appropriate, and is applicable to different design requirements, and the implementability of the solution is improved.

In a possible implementation of the first aspect, a control channel of the communication apparatus includes an uplink control channel and a downlink control channel. A traffic channel of the communication apparatus includes an uplink traffic channel and a downlink traffic channel. A coverage capability gap between the control channel and the traffic channel is greater than zero. The coverage capability gap between the control channel and the traffic channel is a smaller one between an uplink coverage capability gap and a downlink coverage capability gap. The uplink coverage capability gap is a difference between a minimum value of a demodulation threshold of the uplink control channel and a demodulation threshold of the uplink traffic channel. The downlink coverage capability gap is a difference between a minimum value of a demodulation threshold of the downlink control channel and a demodulation threshold of the downlink traffic channel.

In this possible implementation, the coverage capability gap between the control channel and the traffic channel is greater than zero. In other words, a coverage area of the control channel is greater than a coverage area of the traffic channel. In this case, design requirements of the first antenna group and the second antenna group are to enhance a beamforming capability of the traffic channel, and increase the coverage area of the traffic channel to align the coverage area of the control channel and the coverage area of the traffic channel to the fullest extent. The quantity of element units in the second antenna group is greater than the quantity of element units in the first antenna group. The phase shifter is disposed in the second antenna group. The traffic channel mainly uses the second antenna group to meet the requirements. Therefore, when the coverage area of the control channel is greater than the coverage area of the traffic channel, the coverage area of the control channel and the coverage area of the traffic channel can be aligned to the fullest extent using the communication apparatus.

In a possible implementation of the first aspect, a difference between a beamforming gain of the traffic channel and a beamforming gain of the control channel is greater than the coverage capability gap between the control channel and the traffic channel.

In this possible implementation, the beamforming gain of the traffic channel is greater than the beamforming gain of the control channel, and a coverage capability of the control channel is greater than a coverage capability of the traffic channel. To align the coverage area of the control channel and the coverage area of the traffic channel to the fullest extent, the difference between the beamforming gain of the traffic channel and the beamforming gain of the control channel needs to be greater than the coverage capability gap between the control channel and the traffic channel. In other words, the beamforming gain of the traffic channel needs to be increased to the fullest extent. Based on this, a quantity of first radio frequency channels, a quantity of second radio frequency channels, the quantity of element units in the first antenna group of the antenna, and the quantity of element units in the second antenna group of the antenna may be constrained. Therefore, the coverage area of the control channel and the coverage area of the traffic channel are further aligned.

In a possible implementation of the first aspect, a control channel of the communication apparatus includes an uplink control channel and a downlink control channel. A traffic channel of the communication apparatus includes an uplink traffic channel and a downlink traffic channel. A coverage margin of the control channel is greater than zero. The coverage margin of the control channel is a minimum value between an uplink coverage margin and a downlink coverage margin. The uplink coverage margin is a difference between a minimum value of a demodulation threshold of the uplink control channel and a control channel reference value. The downlink coverage margin is a difference between a minimum value of a demodulation threshold of the downlink control channel and the control channel reference value. The control channel reference value is a value of a signal-to-noise ratio received at an edge of a preset coverage area during beamforming on the single first radio frequency channel.

In this possible implementation, the coverage margin of the control channel is greater than zero. In other words, it needs to be ensured that a coverage area of the control channel meets a basic requirement, so that a coverage area of the traffic channel can be increased to the fullest extent on the basis that the coverage area of the control channel is met. Therefore, the coverage area of the traffic channel is further increased.

In a possible implementation of the first aspect, a difference between a beamforming gain of the communication apparatus and a beamforming gain of the first radio frequency channel is less than or equal to the coverage margin of the control channel.

In this possible implementation, if beamforming gains of all radio frequency channels of the entire communication apparatus are greater than the beamforming gain of the first radio frequency channel, and a difference between the beamforming gains of all the radio frequency channels and the beamforming gain of the first radio frequency channel is less than or equal to the coverage margin of the control channel, the coverage area of the traffic channel can be increased to the fullest extent. Based on this, a quantity of first radio frequency channels and a quantity of second radio frequency channels may be constrained. Therefore, the coverage area of the traffic channel is further increased.

In a possible implementation of the first aspect, the communication apparatus is an antenna.

In this possible implementation, the communication apparatus may be the antenna. This improves the implementability of the solution.

In a possible implementation of the first aspect, the communication apparatus further includes the first radio frequency channel and the second radio frequency channel.

In this possible implementation, the first radio frequency channel and the second radio frequency channel are disposed inside the communication apparatus.

The first radio frequency channel and the second radio frequency channel may be included in the radio frequency unit. This improves the implementability of the solution.

In a possible implementation of the first aspect, the communication apparatus is an active antenna unit.

In this possible implementation, the communication apparatus may be the active antenna unit. This improves the implementability of the solution.

In a possible implementation of the first aspect, the communication apparatus further includes the first radio frequency channel, the second radio frequency channel, and a baseband processing unit. The first radio frequency channel and the second radio frequency channel are separately connected to the baseband processing unit.

In this possible implementation, the first radio frequency channel and the second radio frequency channel are disposed inside the communication apparatus. The first radio frequency channel and the second radio frequency channel may be included in the radio frequency unit, and the baseband processing unit is connected to the radio frequency unit. In other words, the first radio frequency channel and the second radio frequency channel are separately connected to the baseband processing unit. The baseband processing unit may further include a baseband channel, and the baseband channel is in a one-to-one correspondence with the radio frequency channel. This improves the implementability of the solution.

In a possible implementation of the first aspect, the baseband processing unit is configured to determine a phase of the phase shifter based on the beamforming requirement of the traffic channel of the communication apparatus. The phase of the phase shifter is determined based on an air interface channel that is carried by the traffic channel and that is in the second antenna group.

In this possible implementation, the baseband processing unit may determine the phase of the phase shifter based on the air interface channel that is carried by the traffic channel and that is in the second antenna group, and deliver the phase to the phase shifter. Therefore, the second radio frequency channel implements a higher beamforming requirement for the second antenna group through time division scanning, and the implementability of the solution is improved.

In a possible implementation of the first aspect, the communication apparatus is a base station.

In this possible implementation, the communication apparatus may be the base station. This improves the implementability of the solution.

In embodiments of this application, the communication apparatus includes the first antenna group and the second antenna group. The quantity of element units in the second antenna group is greater than the quantity of element units in the first antenna group. The first antenna group is connected to the first radio frequency channel, and the second antenna group is connected to the second radio frequency channel. The first antenna group may be driven using the first radio frequency channel group to meet the requirement for the antenna coverage capability of the base station. The second antenna group is driven using the second radio frequency channel group to meet the beamforming requirement of the traffic channel of the base station. Therefore, requirements for the antenna coverage capability requirement and the beamforming effect of the base station are both ensured.

## BRIEF DESCRIPTION OF DRAWINGS

FIG. 1 is a schematic diagram of an architecture of a base station;

FIG. 2 is a schematic diagram of a structure of an embodiment of a communication apparatus according to embodiments of this application;

FIG. 3 is a schematic diagram of a structure of another embodiment of a communication apparatus according to embodiments of this application;

FIG. 4 is a schematic diagram of a beamforming effect of another embodiment of a communication apparatus according to an embodiment of this application;

FIG. 5 is a schematic diagram of a structure of another embodiment of a communication apparatus according to embodiments of this application;

FIG. 6 is a schematic diagram of a structure of another embodiment of a communication apparatus according to embodiments of this application;

FIG. 7 is a schematic diagram of a structure of another embodiment of a communication apparatus according to embodiments of this application; and

FIG. 8 is a schematic diagram of a structure of another embodiment of a communication apparatus according to embodiments of this application.

## DESCRIPTION OF EMBODIMENTS

The following describes embodiments of this application with reference to accompanying drawings. It is clear that the described embodiments are merely a part rather than all of embodiments of this application. A person of ordinary skill in the art may know that, with development of technologies and emergence of new scenarios, technical solutions provided in embodiments of this application are also applicable to similar technical problems.

In the specification, claims, and accompanying drawings of this application, the terms "first", "second", or the like are intended to distinguish between similar objects but do not necessarily indicate a specific order or sequence. It should be understood that the data termed in such a way are interchangeable in appropriate circumstances, so that embodiments described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

The specific term "example" herein means "used as an example, embodiment or illustration". Any embodiment described as an "example" is not necessarily explained as being superior or better than other embodiments.

In addition, to better describe this application, numerous specific details are given in the following specific implementations. A person skilled in the art should understand that this application can still be implemented without some specific details. In some examples, methods, means, elements and circuits that are well-known to a person skilled in the art are not described in detail, so that the subject matter of this application is highlighted.

Embodiments of this application provide a communication apparatus, configured to ensure requirements for both an antenna coverage capability and a beamforming effect of a base station.

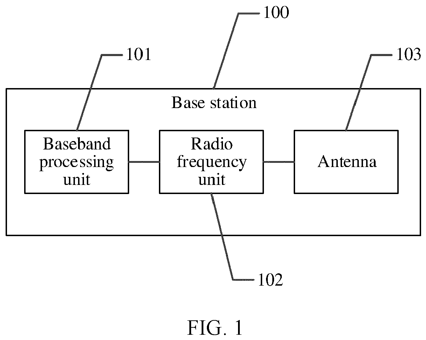

In a mobile communication system, for example, in a 4$^{th}$ generation mobile communication technology (4$^{th}$ generation mobile communication technology, 4G) and a 5$^{th}$ generation mobile communication technology (5$^{th}$ generation mobile communication technology, 5G), a base station and a user device are usually included. On a base station side, refer to FIG. 1. A base station 100 includes a baseband processing unit 101, a radio frequency unit 102, and an antenna 103. The baseband processing unit 101 usually uses a building baseband processing unit (building baseband unit, BBU). The radio frequency unit 102 may use a remote radio unit (remote radio unit, RRU), or may be coupled with the antenna to form an active antenna unit (active antenna unit, AAU). The baseband processing unit 101 includes a baseband channel. The radio frequency unit 102 includes a radio frequency channel. The baseband processing unit 101 and the radio frequency unit 102 are connected through an optical fiber. The radio frequency unit 102 and the antenna 103 are connected through a cable. The baseband processing unit 101 sends data to an air interface through the radio frequency unit 102 and the antenna 103, and finally to the user device.

In addition, the mobile communication system may be specifically used in a frequency division duplexing (frequency division duplexing, FDD) system and a time division duplexing (time division duplexing, TDD) system.

The mobile communication system is usually of an nTnR (n=2/4/8) architecture. nTnR indicates an n-transmit n-receive base station. In other words, n channels are used to receive signals, and n channels are used to send signals. There are a control channel and a traffic channel in the base station. A signal-to-noise ratio of data sending or receiving on the control channel reflects a basic coverage capability of the base station. A signal-to-noise ratio of data sending or receiving on the traffic channel reflects service experience of the user device.

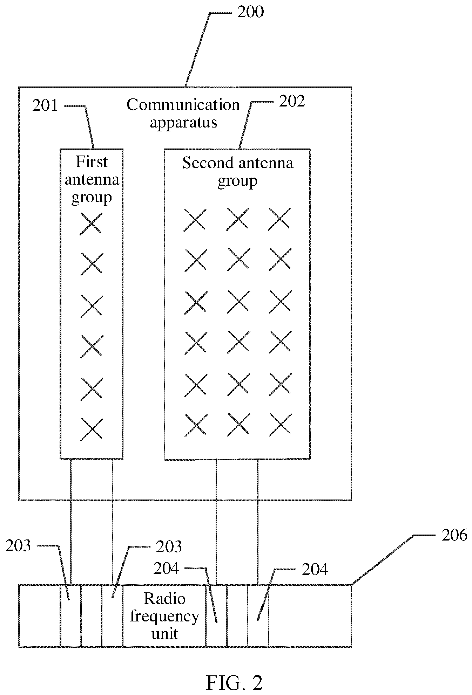

The following describes a communication apparatus in embodiments of this application with reference to the architecture of the foregoing communication system. Refer to FIG. 2. An embodiment of a communication apparatus 200 according to embodiments of this application includes a first antenna group 201 and a second antenna group 202.

A quantity of element units in the second antenna group 202 is greater than a quantity of element units in the first antenna group 201. For example, the first antenna group 201 includes two columns of element units, and the second antenna group 202 includes six columns of element units.

Further, both the first antenna group 201 and the second antenna group 202 are dual-polarized antennas. In this case, the two columns of element units in the first antenna group 201 include one column of left-polarized element units and one column of right-polarized element units. The six columns of element units in the second antenna group 202 include three columns of left-polarized element units and three columns of right-polarized element units. A left-polarized element unit and a right-polarized element unit are of a same symmetric structure. Details are not described subsequently in this embodiment of this application.

The communication apparatus 200 may be connected to a radio frequency channel. The radio frequency channel may be included in a radio frequency unit, and the radio frequency unit may further be connected to a baseband processing unit. Specifically, the first antenna group 201 is connected to first radio frequency channels 203. The second antenna group 202 is connected to second radio frequency channels 204. The first radio frequency channels 203 and the second radio frequency channels 204 are included in the radio frequency unit 206. The radio frequency unit 206 is connected to both the first antenna group 201 and the second antenna group 202 through a cable. In other words, the first antenna group 201 is connected to the first radio frequency channels 203 through a cable, and the second antenna group 202 is connected to the second radio frequency channels 204 through a cable. More specifically, the one column of left-polarized element units of the two columns of element units in the first antenna group 201 is connected to one first radio frequency channel 203. The one column of right-polarized element units of the two columns of element units is connected to the other first radio frequency channel 203. The three columns of left-polarized element units of the six columns of element units in the second antenna group 202 are connected to one second radio frequency channel 204. The three columns of right-polarized element units of the six columns of element units are connected to the other second radio frequency channel 204. In other words, the first antenna group 201 corresponds to two first radio frequency channels 203, and the second antenna group 202 corresponds to two second radio frequency channels 204.

In an application process, the first radio frequency channels 203 drive the two columns of element unit in the first antenna group 201, and enable data of a control channel to be sent or received mainly via the two columns of element units in the first antenna group 201, to ensure a basic coverage capability of the control channel of the communication apparatus. The second radio frequency channels 204 drive the six columns of element units in the second antenna group 202, and enable data of a traffic channel to be sent or received via the two columns of element units in the first antenna group 201 and the six columns of element unit in the second antenna group 202, to ensure a beamforming capability of the traffic channel of the communication apparatus 200. Therefore, service experience of a user device is ensured.

In this embodiment of this application, the communication apparatus includes the first antenna group and the second antenna group. The quantity of element units in the second antenna group is greater than the quantity of element units in the first antenna group. The first antenna group is connected to the first radio frequency channels, and the second antenna group is connected to the second radio frequency channels. The first antenna group may be driven using a first radio frequency channel group to meet a requirement for a basic coverage capability of a base station. The second antenna group is driven using a second radio frequency channel group to meet a beamforming requirement of the traffic channel of the base station. Therefore, requirements for the basic coverage capability and a beamforming effect of the base station are both ensured.

In embodiments of this application, the communication apparatus may be specifically an antenna, an active antenna unit, or a base station. Descriptions are separately provided below.

I. The communication apparatus is an antenna.

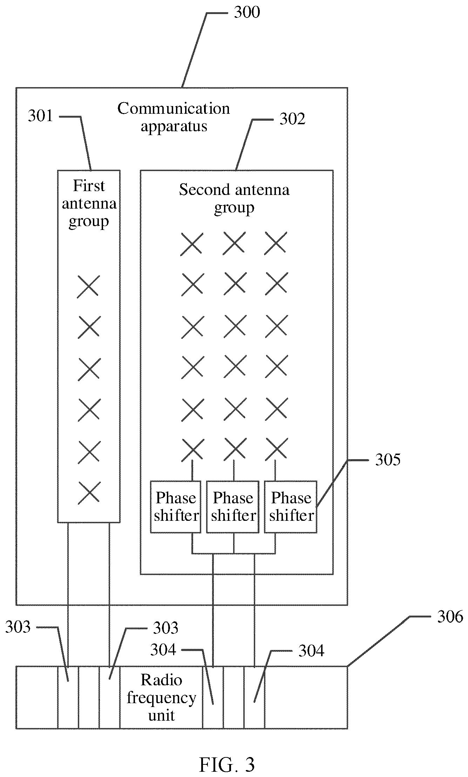

Refer to FIG. 3. Another embodiment of a communication apparatus according to embodiments of this application includes a first antenna group 301, a second antenna group 302, and phase shifters 305.

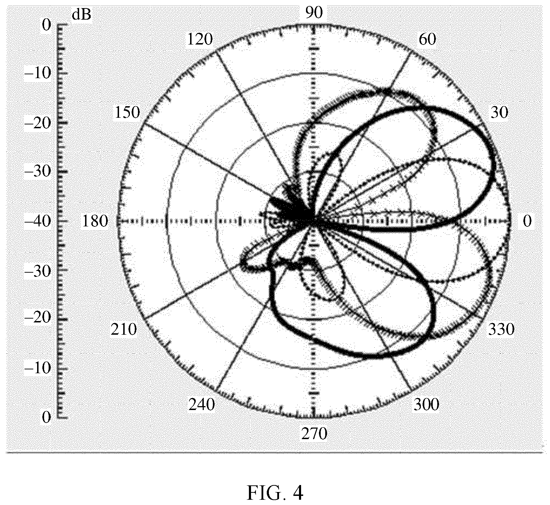

The first antenna group 301 is connected to first radio frequency channels 303 of an external radio frequency unit 306 through a cable. The second antenna group 302 is connected to second radio frequency channels 304 of the external radio frequency unit 306 through a cable. The phase shifters 305 are disposed in the second antenna group 302. The second antenna group 302 is configured to implement analog beamforming using the phase shifters 305. For example, the phase shifters 305 are disposed on an interface of each column of six columns of element units in the second antenna group 302. Three columns of left-polarized element units are coupled into an interface of one left-polarized element unit, and three columns of right-polarized element units are coupled into an interface of one right-polarized element unit. The two interfaces are respectively connected to two second radio frequency channels 304. The phase shifters 305 may receive phases of the phase shifters 305 sent by the second radio frequency channels 304. In addition, dynamic analog beamforming is completed based on the phases of the phase shifters 305. Refer to FIG. 4. Phase values of the phase shifters 305 are [0°, 0°, 0°], [0°, 120°, 240°], and [0°, 240°, 120°]. A beamforming gain of the six columns of element units in the second antenna group 302 is higher than a beamforming gain of two columns of element units in the first antenna group 301.

Further, a quantity of element units in the second antenna group 302 is an integer multiple of a quantity of element units in the first antenna group 301. For example, the first antenna group 301 includes two columns of element units, to be specific, one column of left-polarized element units and one column of right-polarized element units. In this case, the second antenna group 302 may include four columns of element units, to be specific, two columns of left-polarized element units and two columns of right-polarized element units. In this case, the quantity of element units in the second antenna group 302 is twice as many as the quantity of element units in the first antenna group 301. The second antenna group 302 may alternatively include six columns of element units, to be specific, three columns of left-polarized element units and three columns of right-polarized element units. In this case, the quantity of element units in the second antenna group 302 is three times as many as the quantity of element units in the first antenna group 301. When the first antenna group 301 includes four columns of element units, to be specific, two columns of left-polarized element units and two columns of right-polarized element units, the second antenna group 302 includes at least eight columns of element units, to be specific, four columns of left-polarized element units and four columns of right-polarized element units. In this case, the quantity of element units in the second antenna group 302 is twice as many as the quantity of element units in the first antenna group 301. Another case is not described in this embodiment of this application.

When the quantity of element units in the second antenna group 302 is an integer multiple of the quantity of element units in the first antenna group 301, a quantity of first radio frequency channels 303 that are connected to the antenna, a quantity of second radio frequency channels 304 that are connected to the antenna, the quantity of element units in the first antenna group 301 of the antenna, and the quantity of element units in the second antenna group 302 of the antenna may be optimized based on a requirement of the antenna. Descriptions are separately provided below.

1. A coverage area of a control channel of the antenna and a coverage area of a traffic channel of the antenna are aligned to the fullest extent.

The control channel of the antenna includes an uplink control channel and a downlink control channel. The traffic channel of the antenna includes an uplink traffic channel and a downlink traffic channel. The uplink control channel mainly includes a physical random access channel (physical random access channel, PRACH), and a physical uplink control channel (physical uplink control channel, PUCCH). The traffic channel includes a physical uplink shared channel (physical uplink shared channel, PUSCH). In the case that a missing detection rate of the PRACH is a %, a missing detection rate of the PUCCH is b %, and a transmission rate of the PUSCH is c MBps, demodulation thresholds $S_{PRACH}$, $S_{PUCCH}$, and $S_{PUSCH}$ of the PRACH, the PUCCH, and the PUSCH are obtained through link simulation, based on a protocol-defined channel coding and modulation scheme, a conventional receiver solution, and by using an ideal protocol-defined 1T1R base station where a terminal sends a signal and a base station receives the signal as an evaluation prerequisite. Units of the demodulation thresholds are dB. The PRACH is used as an example, and a demodulation threshold indicates a minimum received signal-to-noise ratio (signal-noise ratio, SNR) supported by the PRACH when the PRACH meets a needed missing detection requirement. In other words, when a received signal-to-noise ratio is lower than the threshold, a demodulation performance of the PRACH that is sent by the user device may not meet the missing detection requirement. Similarly, the downlink control channel or signal mainly includes a physical downlink control channel (physical downlink control channel, PDCCH), a synchronization signal block (synchronization signal block, SSB), and remaining minimum system information (remaining minimum system information, RMSI). The downlink traffic channel includes a physical downlink shared channel (physical downlink shared channel, PDSCH). Demodulation thresholds of the downlink channels $S_{PDCCH}$, $S_{SSB}$, $S_{RMSI}$, and $S_{PDSCH}$ are obtained by using a same calculation manner as that of the uplink demodulation threshold.

By using demodulation thresholds of the control channel and the traffic channel, an uplink coverage capability gap $S_{UL,gap} = min(S_{PRACH}, S_{PUCCH}) - S_{PUSCH}$ between the control channel and the traffic channel may be obtained, and a downlink coverage capability gap $S_{DL,gap} = min(S_{SSB}, S_{RMSI}) - S_{PDSCH}$ between the control channel and the traffic channel is obtained. In this case, a coverage capability gap between the control channel and the traffic channel is $S_{gap} = min(S_{UL,gap}, S_{DL,gap})$. When $S_{gap} > 0$, it indicates that the coverage area of the control channel is greater than the coverage area of the traffic channel. A beamforming capability of the traffic channel may be enhanced, and the coverage area of the traffic channel is increased, so that the coverage area of the control channel and the coverage area of the traffic channel are aligned to the fullest extent. In addition, the quantity of element units in the second antenna group is greater than the quantity of element units in the first antenna group, and the phase shifters are disposed in the second antenna group. The traffic channel mainly uses the second antenna group to meet the requirement. Therefore, when the coverage area of the control channel is greater than the coverage area of the traffic channel, the coverage area of the control channel and the coverage area of the traffic channel can be aligned to the fullest extent using the communication apparatus.

In this case, in a possible implementation, a difference between a beamforming gain of the traffic channel and a beamforming gain of the control channel is greater than the coverage capability gap between the control channel and the traffic channel. For example, an $n$T$n$R base station drives $m$ columns of element units. In other words, all element units of the first antenna group 301 and the second antenna group 302 are $m$ columns. There are $x$ first radio frequency channels 303 and $y$ second radio frequency channels 304. The first antenna group 301 and the second antenna group 302 are dual-polarized antennas. In this case, $x$ and $y$ are even numbers. The first antenna group 301 includes one column of element units, and the second antenna group 302 includes K columns of element units. In other words, the quantity of element units in the second antenna group 302 is K times as many as the quantity of element units in the first antenna group 301. In this case, $x + y = n$, and $x + yK = m$.

The difference between the beamforming gain of the traffic channel and the beamforming gain of the control channel may be represented as

$$20 \times log_{10}\left(\frac{x+y\sqrt{\frac{1}{K}}}{x}\right),$$

namely,

$$20 \times log_{10}(1+\frac{y}{x\sqrt{K}})$$

. The traffic channel is beamformed by $m$ columns of element units of the first antenna group 301 and the second antenna group 302. Power of each element unit in $yK$ columns of element units is $\frac{1}{K}$. Power of each element unit in $x$ columns of element units is 1. In this case, signal power of the traffic channel may be represented as

$$x + y\sqrt{\frac{1}{K}}$$

. The control channel is mainly beamformed by $x$ columns of element units of the first antenna group 301. Signal amplitude of the control channel may be represented as $x$. The difference between the beamforming gain of the traffic channel and the beamforming gain of the control channel is

$$20 \times log_{10}(1+\frac{y}{x\sqrt{K}})$$

obtained through dB unit

$$20 \times log_{10}(1 + \frac{y}{x\sqrt{K}}) > S_{gap}$$

conversion, where . In this case, the quantity of first radio frequency channels 303 that are connected to the antenna, the quantity of second radio frequency channels 304 that are connected to the antenna, the quantity of element units in the first antenna group 301 of the antenna, and the quantity of element units in the second antenna group 302 of the antenna need to meet a constraint condition, to ensure that coverage capabilities of the traffic channel and the control channel of the $n$T$n$R base station are aligned to the fullest extent in use. In addition, requirements for an antenna coverage capability and a beamforming effect of the base station are ensured, basic coverage of the control channel within 120° of an entire cell is ensured, an increase in resource overheads caused by beam scanning of the control channel is avoided, and the beamforming capability of the traffic channel is enhanced. Therefore, service experience is improved. Constraints on the quantity of first radio frequency channels 303 that are connected to the antenna and the quantity of second radio frequency channels 304 that are connected to the antenna may be specifically reflected in the antenna as a quantity of interfaces of the first radio frequency channels 303 that are connected to the antenna and a quantity of interfaces of the second radio frequency channels 304 that are connected to the antenna.

For example, $S_{gap}$ = 6 $d$B. Refer to FIG. 3. In this case, $x$ = 2, and $y$ = 2. To be specific, there are two first radio frequency channels 303 and two second radio frequency channels 304. In this case, there is one first antenna group 301, and the first antenna group 301 includes two columns of element units. There is one second antenna group 302, and the second antenna group 302 includes 2K columns of element units, where K ≥ 2. In this case, K is set to 3, and the second antenna group 302 includes six columns of element units.

In this embodiment of this application, when the coverage area of the control channel of the antenna and the coverage area of the traffic channel of the antenna are aligned to the fullest extent, the quantity of first radio frequency channels that are connected to the antenna, the quantity of second radio frequency channels that are connected to the antenna, the quantity of element units in the first antenna group of the antenna, and the quantity of element units in the second antenna group of the antenna are constrained. Therefore, when the coverage area of the control channel of the antenna and the coverage area of the traffic channel of the antenna are aligned to the fullest extent, the requirements for the basic coverage capability and the beamforming effect of the base station are ensured.

2. A coverage area of a traffic channel is increased to the fullest extent on a basis that a coverage area of a control channel is met.

Demodulation thresholds $S_{PRACH}$ and $S_{PUCCH}$ of an uplink control channel, and demodulation thresholds $S_{PDCCH}$, $S_{SSB}$ and $S_{RMSI}$ of a downlink control channel are obtained in a same manner as that in the first case. A control channel reference value is a value of a signal-to-noise ratio received at an edge of a preset coverage area during beamforming on a single first radio frequency channel, namely, a value of a signal-to-noise ratio received at an edge of an expected coverage area when the communication apparatus uses a single channel for beamforming, and is represented as $S_{base}$ - 20 × $log_{10}(n)$, where $S_{base}$ is a basic demodulation signal-to-noise ratio requirement of the nTnR base station, and 20 × $log_{10}(n)$ is a sum of power corresponding to a quantity of channels $n$ of the communication apparatus. In this case, an uplink coverage margin $S_{UL,gap}$ = $min(S_{PRACH}, S_{PUCCH})$ - $S_{base}$ + 20 × $log_{10}(n)$, a downlink coverage margin $S_{DL,gap}$ = $min(S_{PDCCH}, S_{SSB}, S_{RMSI})$ - $S_{base}$ + 20 × $log_{10}(n)$, and a coverage margin of the control channel $S_{gap}$ = $min(S_{UL,gap}, S_{DL,gap})$. When $S_{gap}$ > 0, it indicates that the control channel can meet the coverage area requirement of the control channel without n channels. In this case, the coverage area of the traffic channel may be increased to the fullest extent. A difference between a beamforming gain of the communication apparatus and a beamforming gain of the first radio frequency channel is less than or equal to the coverage margin of the control channel, in other words, a difference between beamforming gains of all radio frequency channels of the communication apparatus and the beamforming gain of the first radio frequency channel is less than or equal to the coverage margin of the control channel. That is, $S_{base}$ - 20 × $log_{10}(n)$ ≤ $S_{gap}$, and $S_{gap}$ + 20 × $log_{10}(n)$ > $S_{base}$. A value of $x$ is a minimum integer value that meets

$$x \geq 10^{\frac{S_{base}-S_{gap}}{20}}$$

. In this case, the quantity of second radio frequency channels $y$ = $n$ - $x$. In this case, the quantity of first radio frequency channels that are connected to the antenna and the quantity of second radio frequency channels that are connected to the antenna need to meet a constraint condition, to ensure that the coverage area of the traffic channel is increased to the fullest extent on the basis of the coverage area of the control channel of the $n$T$n$R base station in use, and ensure requirements for an antenna coverage capability and a beamforming effect of the base station. Constraints on the quantity of first radio frequency channels that are connected to the antenna and the quantity of second radio frequency channels that are connected to the antenna may be specifically reflected in the antenna as a quantity of interfaces of the first radio frequency channels that are connected to the antenna and a quantity of interfaces of the second radio frequency channels that are connected to the antenna.

In addition, it should be noted that, when a panel size of the antenna supports arrangement of only $m$ columns of equidistant element units, where K is an integer.

In other words, the quantity of element units in the second antenna group is an integer multiple of the quantity of element units in the first antenna group.

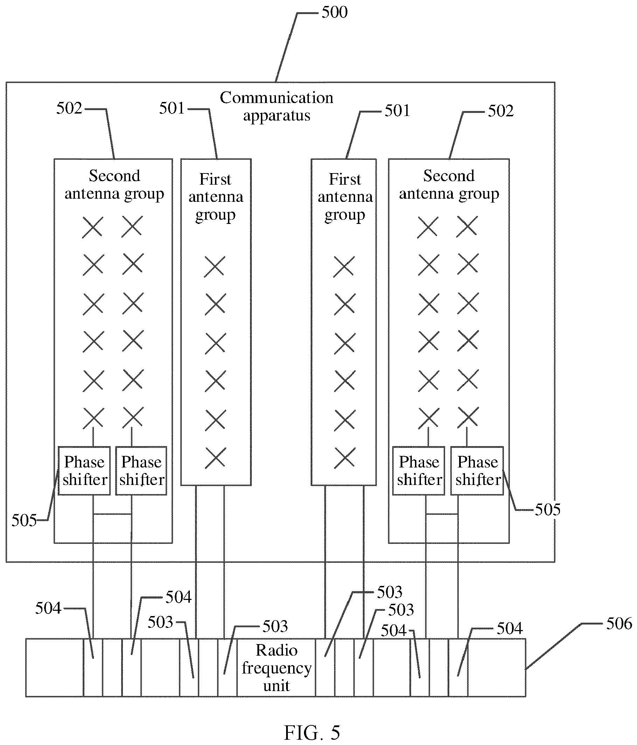

For example, as shown in FIG. 5, a communication apparatus 500 is disposed in an 8T8R base station. Second antenna groups 502 may be disposed on two sides of first antenna groups 501. The first antenna groups 501 are connected to first radio frequency channels 503 of an external radio frequency unit 506 through a cable. The second antenna groups 502 are connected to second radio frequency channels 504 of the external radio frequency unit 506 through a cable. $S_{gap}$ = 6$d$B. In this case, $x$ = 4, and $y$ = 4. To be specific, there are four first radio frequency channels 503, and four second radio frequency channels 504. In this case, there are two first antenna groups 501, and the first antenna groups 501 include four columns of element units in total. There are two second antenna groups 502, and the second antenna groups 502 include 2K columns of element units in total, where K ≥ 2. In this case, K is set to 2. To be specific, the second antenna groups 502 include eight columns of element units in total. Phase shifters 505 are disposed in the second antenna groups 502.

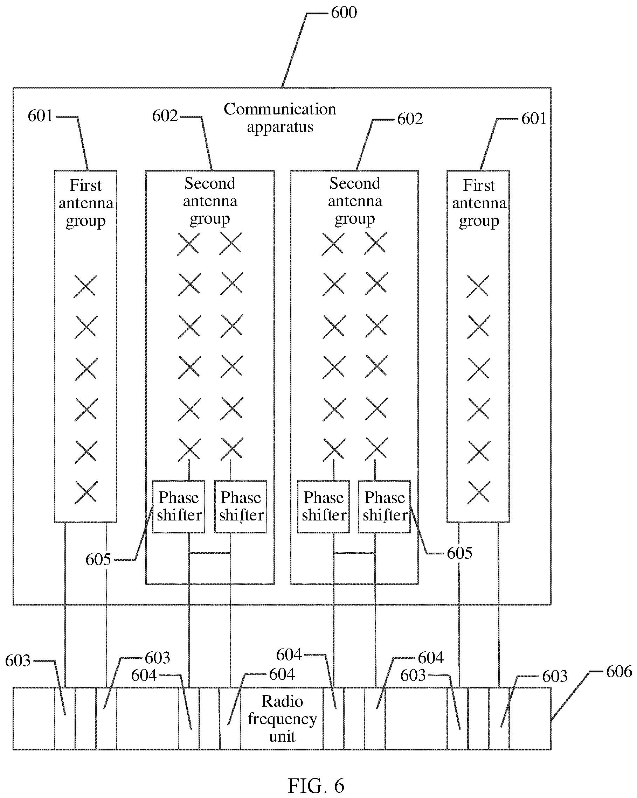

For example, as shown in FIG. 6, a communication apparatus 600 is disposed in an 8T8R base station. Second antenna groups 602 may be disposed between first antenna groups 601. The first antenna groups 601 are connected to first radio frequency channels 603 of an external radio frequency unit 606 through a cable. The second antenna groups 602 are connected to second radio frequency channels 504 of the external radio frequency unit 606 through a cable. $S_{gap}$ = 6 dB. In this case, $x$ = 4, and $y$ = 4. To be specific, there are four first radio frequency channels 603 and four second radio frequency channels 604. In this case, there are two first antenna groups 601, and the first antenna groups 601 include four columns of element units in total. There are two second antenna groups 602, and the second antenna groups 602 include 2K columns of element units in total, where K ≥ 2. In this case, K is set to 2. To be specific, the second antenna groups 602 include eight columns of element units in total. Phase shifters 605 are disposed in the second antenna groups 602.

In this embodiment of this application, when the coverage area of the traffic channel is increased to the fullest extent on the basis that the coverage area of the control channel of the antenna is met, the quantity of first radio frequency channels that are connected to the antenna and the quantity of second radio frequency channels that are connected to the antenna are constrained. Therefore, when the coverage area of the traffic channel is increased as much as possible on the basis that the coverage area of the control channel of the antenna is met, the requirements for the basic coverage capability the beamforming effect of the base station are ensured.

II. The communication apparatus is an active antenna unit.

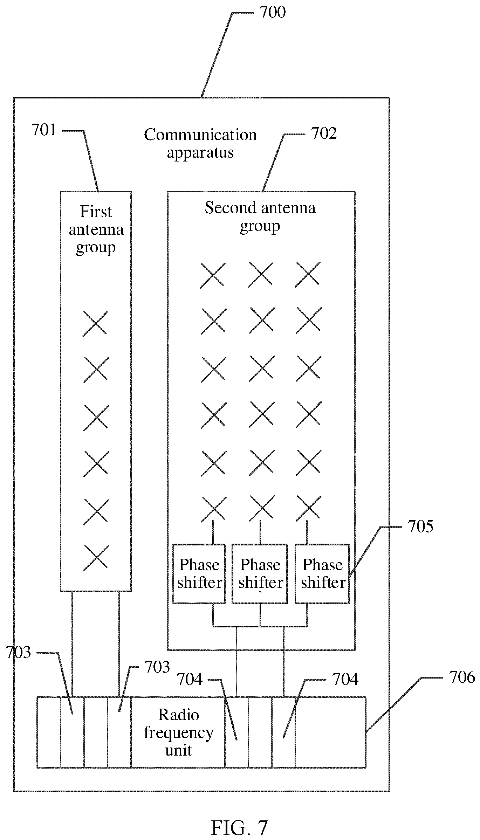

Refer to FIG. 7. Another embodiment of a communication apparatus 700 according to embodiments of this application includes a first antenna group 701, a second antenna group 702, first radio frequency channels 703, second radio frequency channels 704, phase shifters 705, and a radio frequency unit 706. The first radio frequency channels 703 in the radio frequency unit 706 are connected to the first antenna group 701 through cables, and the second radio frequency channels 704 of the radio frequency unit 706 are connected to the second antenna group 702 through cables. The communication apparatus 700 is the active antenna unit.

For example, the first antenna group 701 includes two columns of element units, and the second antenna group 702 includes four columns of element units. There are two first radio frequency channels 703 and two second radio frequency channels 704. A quantity of radio frequency units 706 may be any number. If there is one radio frequency unit 706, the radio frequency unit 706 includes four radio frequency channels, and there are four interfaces that are on the radio frequency unit 706 and that are configured to connect to the first antenna group 701 and the second antenna group 702 through cables. If there are two radio frequency units 706, each radio frequency unit 706 includes two radio frequency channels, and there are two interfaces that are on each radio frequency unit 706 and that are configured to connect to the first antenna group 701 and the second antenna group 702 through the cables. Cables may be in a one-to-one correspondence with radio frequency channels.

A quantity of element units in the second antenna group 702 is greater than a quantity of element units in the first antenna group 701. For a specific implementation of the active antenna unit, refer to the cases when the communication apparatus is the antenna. Details are not described in this embodiment of this application.

The active antenna unit is provided in this embodiment of this application, including the first antenna group, the second antenna group, the first radio frequency channels, the second radio frequency channels, and the radio frequency unit. The quantity of element units in the second antenna group is greater than the quantity of element units in the first antenna group. The first antenna group is connected to the first radio frequency channels, and the second antenna group is connected to the second radio frequency channels. The first antenna group may be driven using a first radio frequency channel group to meet a requirement for a basic coverage capability of a base station. The second antenna group is driven using a second radio frequency channel group to meet a beamforming requirement of a traffic channel of the base station. Therefore, the requirements for the basic coverage capability and a beamforming effect of the base station are both ensured.

III. The communication apparatus is a base station.

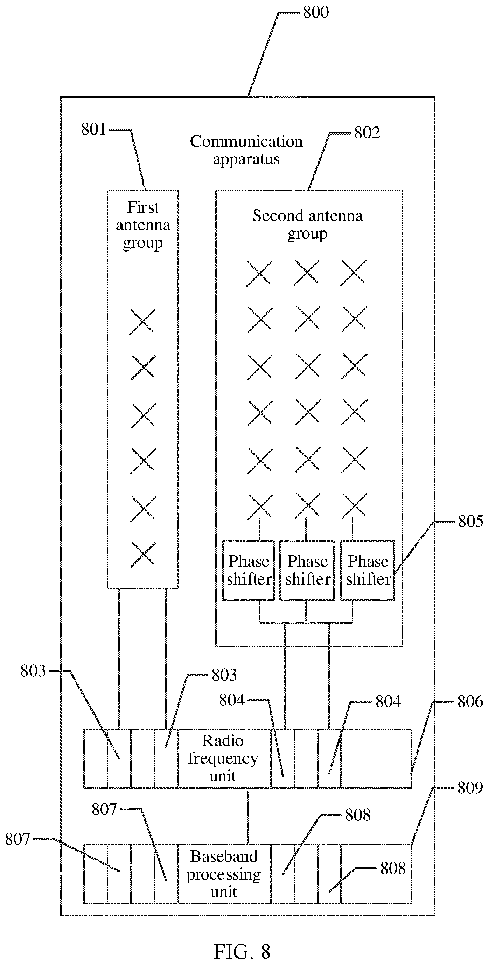

Refer to FIG. 8. Another embodiment of a communication apparatus 800 according to embodiments of this application includes a first antenna group 801, a second antenna group 802, first radio frequency channels 803, second radio frequency channels 804, phase shifters 805, a radio frequency unit 806, first baseband channels 807, second baseband channels 808, and a baseband processing unit 809. The first radio frequency channels 803 in the radio frequency unit 806 are connected to the first antenna group 801 through a cable. The second radio frequency channels 804 in the radio frequency unit 808 are connected to the second antenna group 802 through the cable. The first baseband channels 807 in the baseband processing unit 809 are connected to the radio frequency unit 806 through optical fibers, and the second baseband channels 808 of the baseband processing unit 809 are connected to the radio frequency unit 806 through optical fibers. The communication apparatus 800 is the base station.

A quantity of element units in the second antenna group 802 is greater than a quantity of element units in the first antenna group 801. The baseband processing unit 809 is configured to determine a phase of a phase shifter 805 based on a beamforming requirement of a traffic channel of the communication apparatus 800. The phase of the phase shifter 805 is determined based on an air interface channel that is carried by the traffic channel and that is in the second antenna group 802.

It should be noted that the radio frequency unit 806 may be coupled with the first antenna group 801 and the second antenna group 802 as an AAU.

Specifically, 5G communication is used as an example. Frequency division scheduling is defined to be performed on an SSB and a PDSCH at the same time. In other words, requirements of a traffic channel and a control channel need to be met at the same time. The baseband processing unit 809 may specifically include a multiple access channel (multiple access channel, MAC) resource controller and a physical layer. The MAC resource controller manages resource allocation, and performs, in a first baseband channel 807 and a second baseband channel 808, weighting on the control channel and the traffic channel via the physical layer, to complete digital beamforming. In addition, at each scheduling moment of the communication apparatus 800, the baseband processing unit 809 further determines the phase of the phase shifter 805. In this case, the baseband processing unit 809 only needs to consider the beamforming requirement of the traffic channel, and does not need to consider a beamforming requirement of the control channel. In other words, the control channel is mainly driven by the first antenna group 801, and the digital beamforming is completed in the first baseband channel 807. In this case, in addition to completing the digital beamforming in the first baseband channel 807 and the second baseband channel 808, the traffic channel uses the phase shifter 805 to perform analog beamforming. The phase of the phase shifter 805 is determined by a phase shifter weight that is determined by the baseband processing unit 809. The phase shifter weight $w = f(Z)$, where $H$ is the air interface channel that is of a terminal in the second antenna group 802 and that is carried by the traffic channel at a current moment. $Z \times Z^H = UAU^H$, where $Z^H$ is a conjugate transposition matrix of $Z$. In other words, $UAU^H$ is obtained through performing singular value decomposition (singular value decomposition, SVD) on $Z \times Z^H$, where a matrix $U$ is a matrix formed by eigenvectors of $Z \times Z^H$. A diagonal element of a matrix $A$ is a singular value. In this case, $w = f(Z) = U(:, 1)$, where $U(:, 1)$ represents the $1^{st}$ column of $U$.

For example, $S_{gap}$ = 6$d$B. In this case, $x = 2$, and $y = 2$. There are two first radio frequency channels 803 and two second radio frequency channels 804. Similarly, there are two first baseband channels 807 and two second baseband channels 808. The first antenna group 801 includes two columns of element units, and the second antenna group 802 includes 2K columns of element units, where K ≥ 2. In this case, K is set to 3. To be specific, the second antenna group 802 includes six columns of element units. The baseband processing unit 809 sends the phase shifter weight, namely, the phase of the phase shifter 805 to the phase shifter 805 via the second baseband channels 808, the radio frequency unit 806, and the second radio frequency channels 804. Refer to FIG. 4, the phase shifters 805 performs dynamic analog beamforming on the traffic channel based on phases [0°, 0°, 0°], [0°, 120°, 240°], and [0°, 240°, 120°] of the phase shifters 805, to obtain three analog beams. In other words, the second radio frequency channels 804 perform time division scanning on the three analog beams, to implement a higher beamforming requirement. This structure ensures a basic coverage requirement of the control channel, avoids beam scanning performed by the control channel using the phase shifters, and reduces resource overheads caused by the beam scanning performed by the control channel. In addition, a panel size may be used to the fullest extent, to enhance coverage of the traffic channel, and more element units may be used to the fullest extent within a design requirement range of the panel size to improve experience of the traffic channel.

The base station is provided in this embodiment of this application, including the first antenna group, the second antenna group, the first radio frequency channels, the second radio frequency channels, the radio frequency unit, the baseband processing unit, the first baseband channels, and the second baseband channels. The quantity of element units in the second antenna group is greater than the quantity of element units in the first antenna group. The baseband processing unit determines the phase of the phase shifter by considering only the beamforming requirement of the traffic channel, so that the first antenna group is driven using a first radio frequency channel group to meet a requirement for a basic coverage capability of a base station, and the second antenna group is driven using a second radio frequency channel group to meet the beamforming requirement of the traffic channel of the base station. Therefore, requirements for the basic coverage capability and a beamforming effect of the base station are both ensured.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In several embodiments provided in this application, it should be understood that the disclosed system, apparatus, and method may be implemented in another manner. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Apart or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to a conventional technology, or all or a part of the technical solutions may be implemented in the form of a software product. The computer software product is stored in a storage medium and includes several instructions for instructing a computer device (which may be a personal computer, a server, a network device, or the like) to perform all or a part of the steps of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

**Claims**

1. A communication apparatus, comprising a first antenna group and a second antenna group, wherein a quantity of element units in the second antenna group is greater than a quantity of element units in the first antenna group, the first antenna group is connected to a first radio frequency channel, and the second antenna group is connected to a second radio frequency channel.

2. The communication apparatus according to claim 1, wherein the communication apparatus further comprises a phase shifter, the phase shifter is disposed in the second antenna group, and the second antenna group is configured to implement analog beamforming via the phase shifter.

3. The communication apparatus according to claim 1 or 2, wherein the quantity of element units in the second antenna group is an integer multiple of the quantity of element units in the first antenna group.

4. The communication apparatus according to claim 3, wherein a control channel of the communication apparatus comprises an uplink control channel and a downlink control channel, and a traffic channel of the communication apparatus comprises an uplink traffic channel and a downlink traffic channel, wherein a coverage capability gap between the control channel and the traffic channel is greater than zero, the coverage capability gap between the control channel and the traffic channel is a smaller one between an uplink coverage capability gap and a downlink coverage capability gap, the uplink coverage capability gap is a difference between a minimum value of a demodulation threshold of the uplink control channel and a demodulation threshold of the uplink traffic channel, and the downlink coverage capability gap is a difference between a minimum value of a demodulation threshold of the downlink control channel and a demodulation threshold of the downlink traffic channel.

5. The communication apparatus according to claim 4, wherein a difference between a beamforming gain of the traffic channel and a beamforming gain of the control channel is greater than the coverage capability gap between the control channel and the traffic channel.

6. The communication apparatus according to claim 3, wherein a control channel of the communication apparatus comprises an uplink control channel and a downlink control channel, and a traffic channel of the communication apparatus comprises an uplink traffic channel and a downlink traffic channel, wherein a coverage margin of the control channel is greater than zero, the coverage margin of the control channel is a smaller one between an uplink coverage margin and a downlink coverage margin, the uplink coverage margin is a difference between a minimum value of a demodulation threshold of the uplink control channel and a control channel reference value, the downlink coverage margin is a difference between a minimum value of a demodulation threshold of the downlink control channel and the control channel reference value, and the control channel reference value is a value of a signal-to-noise ratio received at an edge of a preset coverage area during beamforming on the single first radio frequency channel.

7. The communication apparatus according to claim 6, wherein a difference between a beamforming gain of the communication apparatus and a beamforming gain of the first radio frequency channel is less than or equal to the coverage margin of the control channel.

8. The communication apparatus according to any one of claims 1, 2, or 4 to 7, wherein the communication apparatus is an antenna.

9. The communication apparatus according to any one of claims 1, 2, or 4 to 7, wherein the communication apparatus further comprises the first radio frequency channel and the second radio frequency channel.

10. The communication apparatus according to claim 9, wherein the communication apparatus is an active antenna unit.

11. The communication apparatus according to any one of claims 2 or 4 to 7, wherein the communication apparatus further comprises the first radio frequency channel, the second radio frequency channel, and a baseband processing unit; and the first radio frequency channel and the second radio frequency channel are separately connected to the baseband processing unit.

12. The communication apparatus according to claim 11, wherein the baseband processing unit is configured to determine a phase of the phase shifter based on a beamforming requirement of the traffic channel of the communication apparatus, and the phase of the phase shifter is determined based on an air interface channel that is carried by the traffic channel and that is in the second antenna group.

13. The communication apparatus according to claim 11 or 12, wherein the communication apparatus is a base station.

FIG. 1

200

Communication
apparatus

201

202

First
antenna
group

Second antenna
group

203

203

204

204

206

Radio
frequency
unit

FIG. 2

FIG. 3

FIG. 4

FIG. 5

600

Communication apparatus

601

First antenna group

602

Second antenna group

602

Second antenna group

601

First antenna group

Phase shifter

Phase shifter

Phase shifter

Phase shifter

605

605

603

603

604

604

604

604

603

603

Radio frequency unit

606

FIG. 6

FIG. 7

FIG. 8

## INTERNATIONAL SEARCH REPORT

International application No.

**PCT/CN2022/106718**

### A. CLASSIFICATION OF SUBJECT MATTER

H04B 7/06(2006.01)i

According to International Patent Classification (IPC) or to both national classification and IPC

### B. FIELDS SEARCHED

Minimum documentation searched (classification system followed by classification symbols)

H04B

Documentation searched other than minimum documentation to the extent that such documents are included in the fields searched

Electronic data base consulted during the international search (name of data base and, where practicable, search terms used)

CNPAT; CNKI; WPI; EPODOC: 天线, 组, 数量, 阵子, 振子, 个数, 覆盖, 业务, 控制, 信道, 波束赋形, 解调, antenna, element, group, array, amount, cover, service, control, channel, beamforming

### C. DOCUMENTS CONSIDERED TO BE RELEVANT

| Category* | Citation of document, with indication, where appropriate, of the relevant passages | Relevant to claim No. |
|---|---|---|
| X | CN 108155932 A (ZTE CORP.) 12 June 2018 (2018-06-12)<br>description, paragraphs 6-55, and figure 2 | 1-3, 8-13 |
| A | CN 108155932 A (ZTE CORP.) 12 June 2018 (2018-06-12)<br>description, paragraphs 6-55, and figure 2 | 4-7 |
| X | CN 205657184 U (RESEARCH INSTITUTE OF CHINA MOBILE COMMUNICATIONS CORPORATION et al.) 19 October 2016 (2016-10-19)<br>description, paragraph 3, and figure 1 | 1-3, 8-13 |
| A | CN 213212383 U (GUANGZHOU XAG TECHNOLOGY CO., LTD.) 14 May 2021 (2021-05-14)<br>entire document | 1-13 |
| A | US 2006003697 A1 (NTT DOCOMO, INC.) 05 January 2006 (2006-01-05)<br>entire document | 1-13 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **05 September 2022** | **26 September 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/106718**

| Patent document cited in search report | | | Publication date (day/month/year) | Patent family member(s) | | | Publication date (day/month/year) |
|---|---|---|---|---|---|---|---|
| CN | 108155932 | A | 12 June 2018 | None | | | |
| CN | 205657184 | U | 19 October 2016 | None | | | |
| CN | 213212383 | U | 14 May 2021 | None | | | |
| US | 2006003697 | A1 | 05 January 2006 | CN | 101431360 | A | 13 May 2009 |
| | | | | JP | 2006020211 | A | 19 January 2006 |
| | | | | CN | 1722639 | A | 18 January 2006 |
| | | | | EP | 2403160 | A2 | 04 January 2012 |
| | | | | EP | 1615354 | A2 | 11 January 2006 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110877269